# EUROPEAN PATENT APPLICATION

(11) **EP 4 797 186 A1**
(43) Date of publication of application: **26.08.2026**
(21) Application number: 26158794.3
(22) Date of filing: 16.02.2026
(51) Int. Cl.: G06Q 30/0201, G06V 20/52

(54) **LONG-TERM CLASSIFICATION SYSTEM AND METHOD BASED ON USER MONITORING**

(30) Priority: 19.02.2025 EP 25158890
(71) Applicant: Jobs and You GmbH, 82377 Penzberg (DE)
(72) Inventor: OSTERMANN, Sabine, 82377 Penzberg (DE); PANHOLZER, Katharina, 82377 Penzberg (DE); SCHACKMANN, Nicola, 82538 Geretsried (DE)
(74) Representative: Stellbrink & Partner Patentanwälte mbB

(57) **Abstract**

The invention relates to system wherein the system is a system for long-term user classification, wherein the system comprises: an acquiring component, wherein the acquiring component is configured to acquire at least one data related to at least one user, a classifying component, wherein the classifying component is configured to classify at least one user according to at least one data acquired by the acquiring component, a validation component, wherein the validation component is configured to validate at least one classification option and/or a multitude of classification options, a subsequent classification component wherein the subsequent classification component is configured to generate at least one long-term classification option to at least one user and is configured to classify at least one user according to at least one data acquired by the validation component. The invention further relates to method wherein the method is a method for long-term user classification, wherein the method comprises: operating an acquiring component, wherein operating the acquiring component comprises acquiring at least one data related to at least one user, operating a classifying component, wherein operating the classifying component comprises classifying at least one user according to at least one data acquired by the acquiring component, operating a validation component, wherein operating the validation component comprises validating at least one classification option and/or a multitude of classification options, operating a subsequent classification component wherein operating the subsequent classification component comprises generating at least one long-term classification option to at least one user and comprises classifying at least one user according to at least one data acquired by the validation component.

## Description

### Field

The invention lies in the field of user classification. More particularly, it lies in the field of long-term user classification over time and modular classification according to time factors, user features and external feedback relating to a short-term user classification.

### Background

When classifying users, it is essential to recognize that their drive and goals evolve over time. A system that categorizes users based only on their current preferences and features may fail to account for how their needs shift with experience, changing circumstances, or new opportunities. Someone who initially seeks simplicity may later desire more advanced functionalities, while another user may start with high engagement but gradually lose interest. Without considering this natural progression, classifications risk becoming outdated, leading to experiences that no longer align with the user's evolving expectations. A dynamic approach that adapts to these changes ensures long-term relevance and engagement.

Development such as these have been put to use in the following inventions:
US2016228744A1 relates to a portable device to monitor at least an activity of a user The portable device comprises at least a first sensor configured to capture signals representative of at least a physical parameter induced by at least an activity of the user, and a channel of communication to processing capabilities. The processing capabilities are configured to perform a first classification algorithm to classify the signals representative of the at least a physical parameter over a first period of time into a first set of classes of activities of the user, and to perform a second classification algorithm to classify the at least an activity of the user at the output of the at least first classification algorithm over a second period of time which includes the first period of time using a second set of classes which is different from the first set of classes The invention also relates to a method to monitor, a computer program and a system to monitor at least an activity of a user.

US2013053990A1 relates to a system and method for analyzing an activity session. Data from a monitoring device worn by a user of the system for example is received over a period of time or distance and a classification system of the invention is utilized in real time or post session to determine the activities performed by the user during the session. The data collected relates to multiple parameters monitored during the activity session. The classification system defines an activity using a set of threshold criteria for a combination of parameters and therefore identifies a particular activity performed during the activity session when a combination of monitored parameters satisfies the threshold criteria for a particular activity. Determining the activities performed in this way allows for more useful interpretation of the data which in turn leads to more effective coaching advice and feedback for the user.

However, an important factor is missing when it specifically comes to this specific domain; External feedback based on monitoring of the users related to short-time iteration of classification over time also plays a critical role in refining user classification. While users may have personal perceptions of their needs, insights from outside perspective monitoring at least some of their interactions offer a broader perspective on their actual progress and potential. A user might believe they have fully utilized a system's features, but feedback could reveal gaps in understanding or new areas for growth according to the monitoring perceived. By integrating feedback, user classification becomes more responsive, allowing a more seamless evolution alongside users and a more robust output when it comes to long0term classification.

### Summary

In light of the above, it is therefore an object of the present invention to overcome or at least to alleviate the shortcomings and disadvantages of the prior art. More particularly, it is an object of the present invention to take advantage of feedback generated via monitoring between one short-term classification (classification label applicable for few hours) and a long-term classification (classification label applicable for a few months and/or years) while taking into account the time variable.

These objects are met by the present invention.

In a first aspect, the invention relates to a system wherein the system comprises an acquiring component, a classifying component, a validation component and a subsequent classification component. The system may be a system for long term user classification. The system may also be a system for user monitoring.

The acquiring component may be configured to acquire at least one data related to at least one user. The acquiring component may also comprise at least one human interface device (HID), wherein the at least one human interface device may be configured to acquire at least one data related to at least one user. The acquiring component may further be configured to store at least one data into at least one user data structure, wherein the at least one data relates to at least one data generated by at least one component and/or device comprised in the system. The at least one data may additionally comprise at least one time data. The at least one user data structure may be stored in a server and/or in at least one end-user device.

In one embodiment, the acquiring component may comprise at least one end-user device, wherein the at least one end-user device may comprise the at least one human interface device (HID). The acquiring component may also be configured to transmit and/or receive at least one data to and/or from at least one server. The at least one end-user device may be configured to output at least one data related to at least one time data.

The classifying component may be configured to classify at least one user according to at least one data acquired by the acquiring component. The classifying component may comprise at least one encoder, wherein the at least one encoder may comprise at least one processing component, wherein the at least one processing component may be configured to extract at least one feature from at least one data. The classifying component may also comprise a main component, wherein the main component may comprise at least one processing component, wherein the at least one processing component may be configured to output at least one resulting feature from at least one feature. The main component may be configured to classify at least one feature into at least one resulting feature. The classifying component may further comprise at least one decoder, wherein the at least one decoder may comprise at least one processing component, wherein the at least one decoder may comprise at least one processing component, wherein the at least one processing component may be configured to output at least one classification option and/or a multitude of classification options from at least one resulting feature.

In another embodiment, the at least one decoder may be configured to transmit at least one data to the at least one encoder, wherein the at least one data relates to the at least one resulting feature and/or the at least one classification option. The at least one decoder may be configured to enhance the training and/or output of the at least one encoder.

The validation component may be configured to validate at least one classification option and/or a multitude of classification options. The validation component may also be configured to transmit at least one data to at least one server. The validation component may further be configured to acquire at least one time data and/or at least one location data. The validation component may additionally be configured to monitor at least one user.

For example, after making use of the classification component, the validation component may validate the classification option corresponding to the user by checking the time and location of the user with the corresponding with the classification option associated with it.

Moreover, the validation component may be configured to output at least one validation score and/or at least one validation score corresponding to at least one classification option, and/or corresponding to at least one user. The validation component may also be configured to output at least one state wherein the at least one state depends on at least one threshold related to the at least one validation score. The validation component may further be configured to edit at least one validation score. The validation component may additionally be configured to transmit at least one data related to the at last one validation score to at least one end-user device.

Furthermore, the at least one end-user device may be configured to display the at last one validation score and/or confirm the at least one validation score according to at least one user input. The at least one end-user device may be configured to transmit at least one data related to the confirmation of the at least one validation score to the at least one validation component.

The validation component may comprise at least one selection component, wherein the at least one selection component may be configured to select at least one classification option. The at least one selection component may be configured to select at least one classification option according to at least one user input. The at least one selection component may also comprise at least on human interface device. The at least one selection component may further be configured to organize a multitude of classification options according to at least one user input.

The validation component may comprise at least one implementation component, wherein the at least one implementation component may be configured to organize a multitude of classification options according to feasibility with respect to at least one user. The at least one implementation component may also be configured to organize a multitude of classification options according to feasibility with respect to at least one surveillance user, wherein the feasibility requirement depends on temporal feasibility and spatial feasibility.

The validation component may comprise at least one validation device, wherein the at least one validation device may be configured to validate at least one classification option. The at least one validation device may be configured to validate at least one classification option according to at least one surveillance user input. The at least one validation device may also be configured to detect at least one end-user device and/or monitor the location of at least one end-user device. The validation device may also be configured to output at least one validation score according to at least one surveillance user input. The selection component may further be configured to transmit at least one data related to the at least one selected classification option to the at least one validation device.

In another embodiment, the validation component may comprise at least one sensor, wherein the at least one sensor may be configured to detect at least one end-user device and/or at least one user. The at least one validation device may also be configured to transmit at least one location data, wherein the at least one location data relates to the at least one validation device's location and/or at least one end-user location.

The subsequent classification component may be configured to generate at least one long-term classification option to at least one user. The subsequent classification component may be configured to classify at least one user according to at least one data acquired by the validation component, wherein the at least one data may comprise at least one validation score, wherein the at least one validation score may correspond to the at least one user.

In one embodiment, the subsequent classification component may comprise at least one encoder, wherein the at least one encoder may comprise at least one processing component, wherein the at least one processing component may be configured to extract at least one feature from at least one data. The subsequent classification component may also comprise a main component, wherein the main component may comprise at least one processing component, wherein the at least one processing component may be configured to output at least one resulting feature from at least one feature and/or classify at least one feature into at least one resulting feature. The subsequent classification component may further comprise at least one decoder, wherein the at least one decoder may comprise at least one processing component, wherein the at least one processing component may be configured to output at least one long-term classification option and/or a multitude of long-term classification options from at least one resulting feature.

In another embodiment, the at least one decoder may be configured to transmit at least one data to the at least one encoder, wherein the at least one data relates to the at least one resulting feature and/or the at least one long-term classification option. The at least one decoder may also be configured to enhance the training of the at least one encoder.

In a further embodiment, the subsequent classification component may be configured to output the at least one long-term classification option to the acquiring component. The subsequent classification component may be configured to output at least one long-term classification option according to at least one data originated from the validation device, and/or according to at least one surveillance user input via the validation device.

Furthermore, the system may comprise at least one moderator device, wherein the moderator device may be configured to be operated by a moderator user. The at least one moderator device may also be configured to transmit and/or receive at least one data processed by at least one end-user device and/or a multitude of end-user devices. The at least one moderator device may further be configured to communicate with at least one end-user device and/or at least one validation device.

Additionally and/or alternatively, the subsequent classification module may be configured to transmit at least one long-term classification option to the at least one moderator device. The subsequent classification module may also be configured to transmit and/or receive data to and/or from the at least one moderator device. The selection component may further be configured to transmit and/or receive data to and/or from the at least one moderator device. The at least one moderator device may additionally be configured to set a target validation score per student and/or according to a multitude of classification options.

The system may comprise an administrator device, wherein the administrator device may be configured to be operated by an administrator user. The administrator device may be configured to communicate with at least one moderator device, at least one validation device and/or at least one end-user device. The at least one administrator device may be configured to receive at least one data related to at least one surveillance user candidate from the acquiring component and/or from the at least one data structure. As such, it is possible to modulate the system accordingly by making use of candidates that already participated in user classification previously with or without the use of the system described herein. This presents a further advantage to the present invention.

The components comprised in the system may comprise one or more processing units configured to carry out computer instructions of a program (i.e. machine readable and executable instructions). The processing unit(s) may be singular or plural. For example, the data- processing system may comprise at least one of CPU, GPU, TPU, DSP, APU, ASIC, ASIP or FPGA. The data processing system may comprise memory components, such as, main memory (e.g. RAM), cache memory (e.g. SRAM) and/or secondary memory (e.g. HDD, SDD). The data processing system may comprise volatile and/or non-volatile memory such an SDRAM, DRAM, SRAM, Flash Memory, MRAM, F-RAM, or P-RAM.

In a second aspect, the invention relates to a method wherein the method comprises operating an acquiring component, operating a classifying component, operating a validation component, operating a subsequent classification component. The method may be a method for long term user classification. The method may also be a method for user monitoring.

Operating the acquiring component may comprise acquiring at least one data related to at least one user. Operating the acquiring component may also comprise operating at least one human interface device (HID), wherein operating the at least one human interface device may comprise acquiring at least one data related to at least one user. Operating the acquiring component may further comprise storing at least one data into at least one user data structure, wherein the at least one data relates to at least one data generated by at least one component and/or device operated by the method. The at least one data may additionally comprise at least one time data. The at least one user data structure may be stored in a server and/or in at least one end-user device.

In one embodiment, operating the acquiring component may comprise operating at least one end-user device, wherein operating the at least one end-user device may comprise operating the at least one human interface device (HID). Operating the acquiring component may also comprise transmitting and/or receiving at least one data to and/or from at least one server. Operating the at least one end-user device may comprise outputting at least one data related to at least one time data.

Operating the classifying component may comprise classifying at least one user according to at least one data acquired by the acquiring component. Operating the classifying component may comprise operating at least one encoder, wherein operating the at least one encoder may comprise operating at least one processing component, wherein operating the at least one processing component may comprise extracting at least one feature from at least one data. Operating the classifying component may also comprise operating a main component, wherein operating the main component may comprise operating at least one processing component, wherein operating the at least one processing component may comprise outputting at least one resulting feature from at least one feature. Operating the main component may further comprise classifying at least one feature into at least one resulting feature, wherein operating the at least one decoder may comprise operating at least one processing component, wherein operating the at least one processing component may comprise outputting at least one classification option and/or a multitude of classification options from at least one resulting feature.

In another embodiment, operating the at least one decoder may comprise transmitting at least one data to the at least one encoder, wherein the at least one data relates to the at least one resulting feature and/or the at least one classification option. The at least one decoder may comprise enhancing the training and/or output of the at least one encoder.

Operating the validation component may comprise validating at least one classification option and/or a multitude of classification options. Operating the validation component may also comprise transmitting at least one data to at least one server. Operating the validation component may further comprise acquiring at least one time data and/or at least one location data. Operating the validation component may additionally comprise monitoring at least one user.

For example, after making use of the classification component, operating the validation component may validate the classification option corresponding to the user by checking the time and location of the user with the corresponding with the classification option associated with it.

Moreover, operating the validation component may comprise outputting at least one validation score and/or at least one validation score corresponding to at least one classification option and/or corresponding to at least one user. Operating the validation component may also comprise outputting at least one state wherein operating the at least one state depends on at least one threshold related to the at least one validation score. Operating the validation component may further comprise editing at least one validation score. Operating the validation component may additionally comprise transmitting at least one data related to the at last one validation score to at least one end-user device.

Furthermore, operating the at least one end-user device may comprise displaying the at last one validation score and/or confirming the at least one validation score according to at least one user input. Operating the at least one end-user device may comprise transmitting at least one data related to the confirmation of the at least one validation score to the at least one validation component.

Operating the validation component may comprise operating at least one selection component, wherein operating the at least one selection component may comprise selecting at least one classification option. Operating the at least one selection component may also comprise selecting at least one classification option according to at least one user input. Operating the at least one selection component may further comprise operating at least on human interface device. Operating the at least one selection component may comprise organizing a multitude of classification options according to at least one user input.

Operating the validation component may comprise operating at least one implementation component, wherein operating the at least one implementation component may comprise organizing a multitude of classification options according to feasibility with respect to at least one user. Operating the at least one implementation component may comprise organizing a multitude of classification options according to feasibility with respect to at least one surveillance user, wherein the feasibility requirement depends on temporal feasibility and spatial feasibility.

Operating the validation component may comprise operating at least one validation device, wherein operating the at least one validation device may comprise validating at least one classification option. Operating the at least one validation device may comprise validating at least one classification option according to at least one surveillance user input. Operating the at least one validation device may comprise detecting at least one end-user device and/or monitoring the location of at least one end-user device. Operating the validation device may also comprise outputting at least one validation score according to at least one surveillance user input. Operating the selection component may further comprise transmitting at least one data related to the at least one selected classification option to the at least one validation device.

In another embodiment, operating the validation component may comprise operating at least one sensor, wherein operating the at least one sensor may comprise detecting at least one end-user device and/or at least one user. Operating the at least one validation device may comprise transmitting at least one location data, wherein the at least one location data relates to the at least one validation device's location and/or at least one end-user location.

Operating the subsequent classification component may comprise generating at least one long-term classification option to at least one user. Operating the subsequent classification component may comprise classifying at least one user according to at least one data acquired by the validation component, wherein the at least one data may comprise operating at least one validation score, wherein the at least one validation score may correspond to the at least one user.

In one embodiment, operating the subsequent classification component may comprise operating at least one encoder, wherein operating the at least one encoder may comprise operating at least one processing component, wherein operating the at least one processing component may comprise extracting at least one feature from at least one data. Operating the subsequent classification component may also comprise operating a main component, wherein operating the main component may comprise operating at least one processing component, wherein operating the at least one processing component may comprise outputting at least one resulting feature from at least one feature and/or classifying at least one feature into at least one resulting feature. Operating the subsequent classification component may further comprise operating at least one decoder, wherein operating the at least one decoder may comprise operating at least one processing component, wherein operating the at least one processing component may comprise outputting at least one long-term classification option and/or a multitude of long-term classification options from at least one resulting feature.

In another embodiment, operating the at least one decoder may comprise transmitting at least one data to the at least one encoder, wherein operating the at least one data relates to the at least one resulting feature and/or the at least one long-term classification option. Operating the at least one decoder may also comprise enhancing the training of the at least one encoder.

In a further embodiment, operating the subsequent classification component may comprise outputting the at least one long-term classification option to the acquiring component. Operating the subsequent classification component may comprise outputting at least one long-term classification option according to at least one data originated from the validation device and/or according to at least one surveillance user input via the validation device.

Furthermore, the method may comprise operating at least one moderator device, wherein operating the moderator device may be operated by a moderator user. Operating the at least one moderator device may comprise transmitting and/or receiving at least one data processed by at least one end-user device and/or a multitude of end-user devices. Operating the at least one moderator device may comprise communicating with at least one end-user device and/or at least one validation device.

Additionally and/or alternatively, operating the subsequent classification module may comprise transmitting at least one long-term classification option to the at least one moderator device. Operating the subsequent classification module may also comprise transmitting and/or receiving data to and/or from the at least one moderator device. Operating the selection component may further comprise transmitting and/or receiving data to and/or from the at least one moderator device. Operating the at least one moderator device may additionally comprise setting a target validation score per student and/or according to a multitude of classification options.

The method may comprise operating an administrator device, wherein operating the administrator device may be operated by an administrator user. Operating the administrator device may comprise communicating with at least one moderator device, at least one validation device, and/or at least one end-user device. Operating the at least one administrator device may comprise receiving at least one data related to at least one surveillance user candidate from the acquiring component and/or from the at least one data structure. As such, the method may also modulate itself by making use of candidates that already participated in user classification previously with or without the use of the method described herein. This presents a further advantage to the present invention.

Operating the validation component may comprise outputting at least one validation score corresponding to at least one user, wherein operating the validation component may comprise operating at least one validation device, wherein operating the at least one validation device may comprise validating at least one classification option, and/or wherein operating the validation device may comprise outputting at least one validation score according to at least one surveillance user input.

Operating the validation component may comprise operating at least one sensor, wherein operating the at least one sensor may comprise detecting at least one end-user device.

Operating the subsequent classification component may comprise operating at least one encoder, wherein operating the at least one encoder may comprise operating at least one processing component, wherein operating the at least one processing component may comprise extracting at least one feature from at least one data, a main component, wherein operating the main component may comprise operating at least one processing component, wherein operating the at least one processing component may comprise outputting at least one resulting feature from at least one feature and/or may comprise classifying at least one feature into at least one resulting feature, and at least one decoder, wherein operating the at least one decoder may comprise operating at least one processing component, wherein operating the at least one processing component may comprise outputting at least one long-term classification option from at least one resulting feature.

The method may comprise operating at least one moderator device, wherein operating the moderator device may comprise being operated by a moderator user, wherein operating the at least one moderator device may comprise communicating with the at least one validation device and/or at least one end-user device, wherein operating the subsequent classification module may comprise transmitting at least one long-term classification option to the at least one moderator device, and/or wherein operating the selection component may comprise transmitting and/or receive data to and/or from the at least one moderator device.

The method may comprise operating an administrator device, wherein operating the administrator device may comprise being operated by an administrator user, and/or communicating with at least one moderator device, the at least one validation device and/or the at least one end-user device.

Operating the at least one decoder may comprise transmitting at least one data to the at least one encoder, wherein the at least one data relates to the at least one resulting feature and/or the at least one classification option and wherein operating the at least one decoder may comprise enhancing the training of the at least one encoder.

The method may be a method for user monitoring.

The present invention is also described by the following numbered embodiments.

Below, apparatus embodiments will be discussed. These embodiments are abbreviated by the letter "S" followed by a number. When reference is herein made to an system embodiment, those embodiments are meant.

| | |
|---|---|
| S1. | A system wherein the system comprises |
| | An acquiring component |
| | A classifying component |
| | A validation component |
| | A subsequent classification component |
| S2. | The system according to any of the preceding embodiment, wherein the system is a system for long term user classification. |
| S3. | The system according to any of the preceding embodiments, wherein the system is a system for user monitoring. |
| S4. | The system according to any of the preceding embodiments, wherein the acquiring component is configured to acquire at least one data related to at least one user. |
| S5. | The system according to any of the preceding embodiments, wherein the acquiring component comprises at least one human interface device (HID). |
| S6. | The system according to any of the preceding embodiments with the features of embodiment S5, wherein the at least one human interface device is configured to acquire at least one data related to at least one user. |
| S7. | The system according to any of the preceding embodiments, wherein the acquiring component is configured to store at least one data into at least one user data structure. |
| S8. | The system according to any of the preceding embodiments with the features of embodiment S7, wherein the at least one data relates to at least one data generated by at least one component and/or device comprised in the system. |
| S9. | The system according to any of the preceding embodiments with the features of embodiment S7, wherein the at least one data may comprise at least one time data. |
| S10. | The system according to any of the preceding embodiments with the features of embodiment S7, wherein the at least one user data structure is stored in a server. |
| S11. | The system according to any of the preceding embodiments with the features of embodiment S7, wherein the at least one user data structure is stored in at least one end-user device. |
| S12. | The system according to any of the preceding embodiments, wherein the acquiring component comprises at least one end-user device. |
| S13. | The system according to any of the preceding embodiments with the features of embodiments S5 and S12, wherein the at least one end-user device comprises the at least one human interface device (HID). |
| S14. | The system according to any of the preceding embodiments, wherein the acquiring component is configured to transmit and/or receive at least one data to and/or from at least one server. |
| S15. | The system according to any of the preceding embodiments, with the features of embodiment S12, wherein the at least one end-user device is configured to output at least one data related to at least one time data. |
| S16. | The system according to any of the preceding embodiments wherein the classifying component is configured to classify at least one user according to at least one data acquired by the acquiring component. |
| S17. | The system according to any of the preceding embodiments, wherein the |
| | classifying component comprises at least one encoder, wherein the at least one encoder comprises at least one processing component, wherein the at least one processing component is configured to extract at least one feature from at least one data. |
| S18. | The system according to any of the preceding embodiments, wherein the classifying component comprises a main component, wherein the main component comprises at least one processing component, wherein the at least one processing component is configured to output at least one resulting feature from at least one feature. |
| S19. | The system according to any of the preceding embodiments with the features of embodiment S18, wherein the main component is configured to classify at least one feature into at least one resulting feature. |
| S20. | The system according to any of the preceding embodiments, wherein the classifying component comprises at least one decoder, wherein the at least one decoder comprises at least one processing component, wherein the at least one processing component is configured to output at least one classification option from at least one resulting feature. |
| S21. | The system according to any of the preceding embodiments, wherein the classifying component comprises at least one decoder, wherein the at least one decoder comprises at least one processing component, wherein the at least one processing component is configured to output a multitude of classification options from at least one resulting feature. |
| S22. | The system according to any of the preceding embodiments, with the features of embodiments S17 and, S20 and/or S21, wherein the at least one decoder is configured to transmit at least one data to the at least one encoder, wherein the at least one data relates to the at least one resulting feature and/or the at least one classification option. |
| S23. | The system according to any of the preceding embodiments with the features of embodiment S17 and, S20 and/or S21, wherein the at least one decoder is configured to enhance the training and/or output of the at least one encoder. |
| S24. | The system according to any of the preceding embodiments, wherein the validation component is configured to validate at least one classification option. |
| S25. | The system according to any of the preceding embodiments, wherein the validation component is configured to validate a multitude of classification options. |
| S26. | The system according to any of the preceding embodiments, wherein the validation component is configured to transmit at least one data to at least one server. |
| S27. | The system according to any of the preceding embodiments, wherein the validation component is configured to acquire at least one time data. |
| S28. | The system according to any of the preceding embodiments, wherein the validation component is configured to acquire at least one location data. |
| S29. | The system according to any of the preceding embodiments, wherein the validation component is configured to monitor at least one user. |
| S30. | The system according to any of the preceding embodiments wherein the validation component is configured to output at least one validation score. |
| S31. | The system according to any of the preceding embodiments wherein the validation component is configured to output at least one validation score corresponding to at least one classification option. |
| S32. | The system according to any of the preceding embodiments wherein the validation component is configured to output at least one validation score corresponding to at least one user. |
| S33. | The system according to any of the preceding embodiments with the features of any of embodiments S30-S32, wherein the validation component is configured to output at least one state wherein the at least one state depends on at least one threshold related to the at least one validation score. |
| S34. | The system according to any of the preceding embodiments with the features of any of embodiments S30-S32, wherein the validation component is configured to edit at least one validation score. |
| S35. | The system according to any of the preceding embodiments with the features of any of embodiments S30-S32, wherein the validation component is configured to |
| | transmit at least one data related to the at last one validation score to at least one end-user device. |
| S36. | The system according to any of the preceding embodiments with the features of embodiment S35, wherein the at least one end-user device is configured to display the at last one validation score and/or confirm the at least one validation score according to at least one user input. |
| S37. | The system according to any of the preceding embodiments with the features of embodiment S36, wherein the at least one end-user device is configured to transmit at least one data related to the confirmation of the at least one validation score to the at least one validation component. |
| S38. | The system according to any of the preceding embodiments, wherein the validation component comprises at least one selection component, wherein the at least one selection component is configured to select at least one classification option. |
| S39. | The system according to any of the preceding embodiments, with the features of embodiment S38, wherein the at least one selection component is configured to select at least one classification option according to at least one user input. |
| S40. | The system according to any preceding embodiments with the features of embodiment S38, wherein the at least one selection component comprises at least on human interface device. |
| S41. | The system according to any of the preceding embodiments, wherein the at least one selection component is configured to organize a multitude of classification options according to at least one user input. |
| S42. | The system according to any of the preceding embodiments, wherein the validation component comprises at least one implementation component. |
| S43. | The system according to any of the preceding embodiments with the features of embodiment S42, wherein the at least one implementation component is configured to organize a multitude of classification options according to feasibility with respect to at least one user. |
| S44. | The system according to any of the preceding embodiments with the features of |
| | embodiment S42, wherein the at least one implementation component is configured to organize a multitude of classification options according to feasibility with respect to at least one surveillance user. |
| S45. | The system according to any of the preceding embodiments with the features of any of embodiments S43-S44, wherein the feasibility requirement depends on temporal feasibility and spatial feasibility. |
| S46. | The system according to any of the preceding embodiments, wherein the validation component comprises at least one validation device. |
| S47. | The system according to any of the preceding embodiments with the features of embodiment S46, wherein the at least one validation device is configured to validate at least one classification option. |
| S48. | The system according to any of the preceding embodiments with the features of embodiment S46, wherein the at least one validation device is configured to validate at least one classification option according to at least one surveillance user input. |
| S49. | The system according to any of the preceding embodiments, with the features of embodiments S12 and S46, wherein the at least one validation device is configured to detect at least one end-user device. |
| S50. | The system according to any of the preceding embodiments with the features of embodiment S12 and S46, wherein the validation device is configured to monitor the location of at least one end-user device. |
| S51. | The system according to any of the preceding embodiments with the features of embodiment S30, wherein the validation device is configured to output at least one validation score according to at least one surveillance user input. |
| S52. | The system according to any of the preceding embodiments with the features of embodiments S38 and S46, wherein the selection component is configured to transmit at least one data related to the at least one selected classification option to the at least one validation device. |
| S53. | The system according to any of the preceding embodiments, wherein the validation component comprises at least one sensor. |
| S54. | The system according to any of the preceding embodiments with the features of embodiment 6, wherein the at least one sensor is configured to detect at least one end-user device. |
| S55. | The system according to any of the preceding embodiments with the features of embodiments 6, wherein the at least one sensor is configured to detect at least one user. |
| S56. | The system according to any of the preceding embodiments with the features of embodiment S46, wherein the at least one validation device is configured to transmit at least one location data. |
| S57. | The system according to any of the preceding embodiments with the features of embodiment S56, wherein the at least one location data relates to the at least one validation device's location. |
| S58. | The system according to any of the preceding embodiments, with the features of embodiment S56, wherein the at least one location data relates to at least one end-user location. |
| S59. | The system according to any of the preceding embodiments, wherein the subsequent classification component is configured to generate at least one long-term classification option to at least one user. |
| S60. | The system according to any of the preceding embodiments wherein the subsequent classification component is configured to classify at least one user according to at least one data acquired by the validation component. |
| S61. | The system according to any of the preceding embodiments with the features of any embodiments S30-S32, and embodiment S60, wherein the at least one data comprises at least one validation score. |
| S62. | The system according to any of the preceding embodiments with the features of embodiments S59 and S61, wherein the at least one validation score corresponds to the at least one user. |
| S63. | The system according to any of the preceding embodiments, wherein the subsequent classification component comprises at least one encoder, wherein the |
| | at least one encoder comprises at least one processing component, wherein the at least one processing component is configured to extract at least one feature from at least one data. |
| S64. | The system according to any of the preceding embodiments, wherein the subsequent classification component comprises a main component, wherein the main component comprises at least one processing component, wherein the at least one processing component is configured to output at least one resulting feature from at least one feature. |
| S65. | The system according to any of the preceding embodiments with the features of embodiment S18, wherein the main component is configured to classify at least one feature into at least one resulting feature. |
| S66. | The system according to any of the preceding embodiments, wherein the subsequent classification component comprises at least one decoder, wherein the at least one decoder comprises at least one processing component, wherein the at least one processing component is configured to output at least one long-term classification option from at least one resulting feature. |
| S67. | The system according to any of the preceding embodiments, wherein the subsequent classification component comprises at least one decoder, wherein the at least one decoder comprises at least one processing component, wherein the at least one processing component is configured to output a multitude of long-term classification options from at least one resulting feature. |
| S68. | The system according to any of the preceding embodiments, with the features of embodiments S17 and, S20 and/or S21, wherein the at least one decoder is configured to transmit at least one data to the at least one encoder, wherein the at least one data relates to the at least one resulting feature and/or the at least one long-term classification option. |
| S69. | The system according to any of the preceding embodiments with the features of embodiment S17 and, S20 and/or S21, wherein the at least one decoder is configured to enhance the training of the at least one encoder. |
| S70. | The system according to any of the preceding embodiments with the features of embodiment S59, wherein the subsequent classification component is configured to output the at least one long-term classification option to the acquiring |
| | component. |
| S71. | The system according to any of the preceding embodiments with the features of embodiment S46, wherein the subsequent classification component is configured to output at least one long-term classification option according to at least one data originated from the validation device. |
| S72. | The system according to any of the preceding embodiments with the features of embodiment S46, wherein the subsequent classification component is configured to output at least one long-term classification option according to at least one surveillance user input via the validation device. |
| S73. | The system according to any of the preceding embodiments wherein the system comprises at least one moderator device, wherein the moderator device is configured to be operated by a moderator user. |
| S74. | The system according to any of the preceding embodiments, with the features of embodiment S73, wherein the at least one moderator device is configured to transmit and/or receive at least one data processed by at least one end-user device. |
| S75. | The system according to any of the preceding embodiments, with the features of embodiment S73, wherein the at least one moderator device is configured to transmit and/or receive at least one data processed by a multitude of end-user devices. |
| S76. | The system according to any of the preceding embodiments, with the features of embodiments S73, wherein the at least one moderator device is configured to communicate with at least one end-user device. |
| S77. | The system according to any of the preceding embodiments, with the features of embodiments S46 and S73, wherein the at least one moderator device is configured to communicate with the at least one validation device. |
| S78. | The system according to any of the preceding embodiments with the features of embodiment S73, wherein the subsequent classification module is configured to transmit at least one long-term classification option to the at least one moderator device. |
| S79. | The system according to any of the preceding embodiments with the features of embodiment S73, wherein the subsequent classification module is configured to transmit and/or receive data to and/or from the at least one moderator device. |
| S80. | The system according to any of the preceding embodiments with the features of embodiment S38 and S73, wherein the selection component is configured to transmit and/or receive data to and/or from the at least one moderator device. |
| S81. | The system according to any of the preceding embodiments with the features of embodiment S73, wherein the at least one moderator device is configured to set a target validation score per student and/or according to a multitude of classification options. |
| S82. | The system according to any of the preceding embodiments wherein the system comprises an administrator device, wherein the administrator device is configured to be operated by an administrator user. |
| S83. | The system according to any of the preceding embodiments, with the features of embodiment S82, wherein the administrator device is configured to communicate with at least one moderator device. |
| S84. | The system according to any of the preceding embodiments, with the features of embodiment S46 and S83, wherein the administrator device is configured to communicate with the at least one validation device. |
| S85. | The system according to any of the preceding embodiments, with the features of embodiment S83, wherein the administrator device is configured to communicate with the at least one end-user device. |
| S86. | The system according to any of the preceding embodiments with the features of embodiment S82, wherein the at least one administrator device is configured to receive at least one data related to at least one surveillance user candidate from the acquiring component. |
| S87. | The system according to any of the preceding embodiments with the features of embodiment S7 and S86, wherein the at least one administrator device is configured to receive at least one data related to at least one surveillance user candidate from the at least one data structure. |

Below, method embodiments will be discussed. These embodiments are abbreviated by the letter "M" followed by a number. When reference is herein made to a method embodiment, those embodiments are meant.

| | |
|---|---|
| M1. | A method wherein the method comprises |
| | operating an acquiring component |
| | operating a classifying component |
| | operating a validation component |
| | operating a subsequent classification component |
| M2. | The method according to any of the preceding embodiments, wherein the method is a method for long term user classification. |
| M3. | The method according to any of the preceding embodiments, wherein the method is a method for user monitoring. |
| M4. | The method according to any of the preceding embodiments, wherein operating the acquiring component comprises acquiring at least one data related to at least one user. |
| M5. | The method according to any of the preceding embodiments, wherein operating the acquiring component comprises operating at least one human interface device (HID). |
| M6. | The method according to any of the preceding embodiments with the features of embodiment M5, wherein operating the at least one human interface device comprises acquiring at least one data related to at least one user. |
| M7. | The method according to any of the preceding embodiments, wherein operating the acquiring component comprises storing at least one data into at least one user data structure. |
| M8. | The method according to any of the preceding embodiments with the features of embodiment M7, wherein the at least one data relates to at least one data generated by at least one component and/or device operated by the method. |
| M9. | The method according to any of the preceding embodiments with the features of embodiment M7, wherein the at least one data may comprise at least one time data. |
| M10. | The method according to any of the preceding embodiments with the features of embodiment M7, wherein the at least one user data structure is stored in a server. |
| M11. | The method according to any of the preceding embodiments with the features of embodiment M7, wherein the at least one user data structure is stored in at least one end-user device. |
| M12. | The method according to any of the preceding embodiments, wherein operating the acquiring component comprises operating at least one end-user device. |
| M13. | The method according to any of the preceding embodiments with the features of embodiments M5 and M12, wherein operating the at least one end-user device comprises operating the at least one human interface device (HID). |
| M14. | The method according to any of the preceding embodiments, wherein operating the acquiring component comprises transmitting and/or receiving at least one data to and/or from at least one server. |
| M15. | The method according to any of the preceding embodiments, with the features of embodiment M12, wherein operating the at least one end-user device comprises outputting at least one data related to at least one time data. |
| M16. | The method according to any of the preceding embodiments wherein operating the classifying component comprises classifying at least one user according to at least one data acquired by the acquiring component. |
| M17. | The method according to any of the preceding embodiments, wherein operating the classifying component comprises operating at least one encoder, wherein operating the at least one encoder comprises operating at least one processing component, wherein operating the at least one processing component comprises extracting at least one feature from at least one data. |
| M18. | The method according to any of the preceding embodiments, wherein operating the classifying component comprises operating a main component, wherein operating the main component comprises operating at least one processing component, wherein operating the at least one processing component comprises outputting at least one resulting feature from at least one feature. |
| M19. | The method according to any of the preceding embodiments with the features of embodiment M18, wherein operating the main component comprises classifying at least one feature into at least one resulting feature. |
| M20. | The method according to any of the preceding embodiments, wherein operating the classifying component comprises operating at least one decoder, wherein operating the at least one decoder comprises operating at least one processing component, wherein operating the at least one processing component comprises outputting at least one classification option from at least one resulting feature. |
| M21. | The method according to any of the preceding embodiments, wherein operating the classifying component comprises operating at least one decoder, wherein operating the at least one decoder comprises operating at least one processing component, wherein operating the at least one processing component comprises outputting a multitude of classification options from at least one resulting feature. |
| M22. | The method according to any of the preceding embodiments, with the features of embodiments M17 and, M20 and/or M21, wherein operating the at least one decoder comprises transmitting at least one data to the at least one encoder, wherein the at least one data relates to the at least one resulting feature and/or the at least one classification option. |
| M23. | The method according to any of the preceding embodiments with the features of embodiment M17 and, M20 and/or M21, wherein operating the at least one decoder comprises enhancing the training and/or output of the at least one encoder. |
| M24. | The method according to any of the preceding embodiments, wherein operating the validation component comprises validating at least one classification option. |
| M25. | The method according to any of the preceding embodiments, wherein operating the validation component comprises validating a multitude of classification options. |
| M26. | The method according to any of the preceding embodiments, wherein operating the validation component comprises transmitting at least one data to at least one server. |
| M27. | The method according to any of the preceding embodiments, wherein operating |
| | the validation component comprises acquiring at least one time data. |
| M28. | The method according to any of the preceding embodiments, wherein operating the validation component comprises acquiring at least one location data. |
| M29. | The method according to any of the preceding embodiments, wherein operating the validation component comprises monitoring at least one user. |
| M30. | The method according to any of the preceding embodiments wherein operating the validation component comprises outputting at least one validation score. |
| M31. | The method according to any of the preceding embodiments wherein operating the validation component comprises outputting at least one validation score corresponding to at least one classification option. |
| M32. | The method according to any of the preceding embodiments wherein operating the validation component comprises outputting at least one validation score corresponding to at least one user. |
| M33. | The method according to any of the preceding embodiments with the features of any of embodiments M30-M32, wherein operating the validation component comprises outputting at least one state wherein operating the at least one state depends on at least one threshold related to the at least one validation score. |
| M34. | The method according to any of the preceding embodiments with the features of any of embodiments M30-M32, wherein operating the validation component comprises editing at least one validation score. |
| M35. | The method according to any of the preceding embodiments with the features of any of embodiments M30-M32, wherein operating the validation component comprises transmitting at least one data related to the at last one validation score to at least one end-user device. |
| M36. | The method according to any of the preceding embodiments with the features of embodiment M35, wherein operating the at least one end-user device comprises displaying the at last one validation score and/or confirming the at least one validation score according to at least one user input. |
| M37. | The method according to any of the preceding embodiments with the features of |
| | embodiment M36, wherein operating the at least one end-user device comprises transmitting at least one data related to the confirmation of the at least one validation score to the at least one validation component. |
| M38. | The method according to any of the preceding embodiments, wherein operating the validation component comprises operating at least one selection component, wherein operating the at least one selection component comprises selecting at least one classification option. |
| M39. | The method according to any of the preceding embodiments, with the features of embodiment M38, wherein operating the at least one selection component comprises selecting at least one classification option according to at least one user input. |
| M40. | The method according to any of the preceding embodiments with the features of embodiment M38, wherein operating the at least one selection component comprises operating at least on human interface device. |
| M41. | The method according to any of the preceding embodiments, wherein operating the at least one selection component comprises organizing a multitude of classification options according to at least one user input. |
| M42. | The method according to any of the preceding embodiments, wherein operating the validation component comprises operating at least one implementation component. |
| M43. | The method according to any of the preceding embodiments with the features of embodiment M42, wherein operating the at least one implementation component comprises organizing a multitude of classification options according to feasibility with respect to at least one user. |
| M44. | The method according to any of the preceding embodiments with the features of embodiment M42, wherein operating the at least one implementation component comprises organizing a multitude of classification options according to feasibility with respect to at least one surveillance user. |
| M45. | The method according to any of the preceding embodiments with the features of any of embodiments M43-M44, wherein the feasibility requirement depends on temporal feasibility and spatial feasibility. |
| M46. | The method according to any of the preceding embodiments, wherein operating the validation component comprises operating at least one validation device. |
| M47. | The method according to any of the preceding embodiments with the features of embodiment M46, wherein operating the at least one validation device comprises validating at least one classification option. |
| M48. | The method according to any of the preceding embodiments with the features of embodiment M46, wherein operating the at least one validation device comprises validating at least one classification option according to at least one surveillance user input. |
| M49. | The method according to any of the preceding embodiments, with the features of embodiments M12 and M46, wherein operating the at least one validation device comprises detecting at least one end-user device. |
| M50. | The method according to any of the preceding embodiments with the features of embodiment M12 and M46, wherein operating the validation device comprises monitoring the location of at least one end-user device. |
| M51. | The method according to any of the preceding embodiments with the features of embodiment M30, wherein operating the validation device comprises outputting at least one validation score according to at least one surveillance user input. |
| M52. | The method according to any of the preceding embodiments with the features of embodiments M38 and M46, wherein operating the selection component comprises transmitting at least one data related to the at least one selected classification option to the at least one validation device. |
| M53. | The method according to any of the preceding embodiments, wherein operating the validation component comprises operating at least one sensor. |
| M54. | The method according to any of the preceding embodiments with the features of embodiment M53, wherein operating the at least one sensor comprises detecting at least one end-user device. |
| M55. | The method according to any of the preceding embodiments with the features of embodiments M53, wherein operating the at least one sensor comprises detecting |
| | at least one user. |
| M56. | The method according to any of the preceding embodiments with the features of embodiment M46, wherein operating the at least one validation device comprises transmitting at least one location data. |
| M57. | The method according to any of the preceding embodiments with the features of embodiment M56, wherein the at least one location data relates to the at least one validation device's location. |
| M58. | The method according to any of the preceding embodiments, with the features of embodiment M56, wherein the at least one location data relates to at least one end-user location. |
| M59. | The method according to any of the preceding embodiments, wherein operating the subsequent classification component comprises generating at least one long-term classification option to at least one user. |
| M60. | The method according to any of the preceding embodiments wherein operating the subsequent classification component comprises classifying at least one user according to at least one data acquired by the validation component. |
| M61. | The method according to any of the preceding embodiments with the features of any embodiments M30-M32, and embodiment M60, wherein the at least one data comprises operating at least one validation score. |
| M62. | The method according to any of the preceding embodiments with the features of embodiments M59 and M61, wherein the at least one validation score corresponds to the at least one user. |
| M63. | The method according to any of the preceding embodiments, wherein operating the subsequent classification component comprises operating at least one encoder, wherein operating the at least one encoder comprises operating at least one processing component, wherein operating the at least one processing component comprises extracting at least one feature from at least one data. |
| M64. | The method according to any of the preceding embodiments, wherein operating the subsequent classification component comprises operating a main component, wherein operating the main component comprises operating at least one |
| | processing component, wherein operating the at least one processing component comprises outputting at least one resulting feature from at least one feature. |
| M65. | The method according to any of the preceding embodiments with the features of embodiment M18, wherein operating the main component comprises classifying at least one feature into at least one resulting feature. |
| M66. | The method according to any of the preceding embodiments, wherein operating the subsequent classification component comprises operating at least one decoder, wherein operating the at least one decoder comprises operating at least one processing component, wherein operating the at least one processing component comprises outputting at least one long-term classification option from at least one resulting feature. |
| M67. | The method according to any of the preceding embodiments, wherein operating the subsequent classification component comprises operating at least one decoder, wherein operating the at least one decoder comprises operating at least one processing component, wherein operating the at least one processing component comprises outputting a multitude of long-term classification options from at least one resulting feature. |
| M68. | The method according to any of the preceding embodiments, with the features of embodiments M17 and, M20 and/or M21, wherein operating the at least one decoder comprises transmitting at least one data to the at least one encoder, wherein the at least one data relates to the at least one resulting feature and/or the at least one long-term classification option. |
| M69. | The method according to any of the preceding embodiments with the features of embodiment M17 and, M20 and/or M21, wherein operating the at least one decoder comprises enhancing the training of the at least one encoder. |
| M70. | The method according to any of the preceding embodiments with the features of embodiment M59, wherein operating the subsequent classification component comprises outputting the at least one long-term classification option to the acquiring component. |
| M71. | The method according to any of the preceding embodiments with the features of embodiment M46, wherein operating the subsequent classification component comprises outputting at least one long-term classification option according to at |
| | least one data originated from the validation device. |
| M72. | The method according to any of the preceding embodiments with the features of embodiment M46, wherein operating the subsequent classification component comprises outputting at least one long-term classification option according to at least one surveillance user input via the validation device. |
| M73. | The method according to any of the preceding embodiments wherein the method comprises operating at least one moderator device, wherein operating the moderator device is operated by a moderator user. |
| M74. | The method according to any of the preceding embodiments, with the features of embodiment M73, wherein operating the at least one moderator device comprises transmitting and/or receiving at least one data processed by at least one end-user device. |
| M75. | The method according to any of the preceding embodiments, with the features of embodiment M73, wherein operating the at least one moderator device comprises transmitting and/or receiving at least one data processed by a multitude of end-user devices. |
| M76. | The method according to any of the preceding embodiments, with the features of embodiments M73, wherein operating the at least one moderator device comprises communicating with at least one end-user device. |
| M77. | The method according to any of the preceding embodiments, with the features of embodiments M46 and M73, wherein operating the at least one moderator device comprises communicating with the at least one validation device. |
| M78. | The method according to any of the preceding embodiments with the features of embodiment M73, wherein operating the subsequent classification module comprises transmitting at least one long-term classification option to the at least one moderator device. |
| M79. | The method according to any of the preceding embodiments with the features of embodiment M73, wherein operating the subsequent classification module comprises transmitting and/or receiving data to and/or from the at least one moderator device. |
| M80. | The method according to any of the preceding embodiments with the features of embodiment M38 and M73, wherein operating the selection component comprises transmitting and/or receiving data to and/or from the at least one moderator device. |
| M81. | The method according to any of the preceding embodiments with the features of embodiment M73, wherein operating the at least one moderator device comprises setting a target validation score per student and/or according to a multitude of classification options. |
| M82. | The method according to any of the preceding embodiments wherein the method comprises operating an administrator device, wherein operating the administrator device is operated by an administrator user. |
| M83. | The method according to any of the preceding embodiments, with the features of embodiment M82, wherein operating the administrator device comprises communicating with at least one moderator device. |
| M84. | The method according to any of the preceding embodiments, with the features of embodiment M46 and M83, wherein operating the administrator device comprises communicating with the at least one validation device. |
| M85. | The method according to any of the preceding embodiments, with the features of embodiment M83, wherein operating the administrator device comprises communicating with the at least one end-user device. |
| M86. | The method according to any of the preceding embodiments with the features of embodiment M83, wherein operating the at least one administrator device comprises receiving at least one data related to at least one surveillance user candidate from the acquiring component. |
| M87. | The method according to any of the preceding embodiments with the features of embodiment M7 and M86, wherein operating the at least one administrator device comprises receiving at least one data related to at least one surveillance user candidate from the at least one data structure. |

### Brief Figure Description

The present invention will now be described with reference to the accompanying drawings which illustrate embodiments of the invention. These embodiments should only exemplify, but not limit, the present invention.
- Fig. 1: schematically depicts the system according to embodiments of the present invention;
- Fig. 2: schematically depicts the acquiring and classifying components according to embodiments of the present invention;
- Fig. 3: schematically depicts the validation component and the long-term classification component according to embodiments of the present invention;
- Fig. 4: schematically depicts an example of some of the system's devices' data transmission permissions according to embodiments of the present invention;
- Fig. 5: schematically depicts an example of the system's devices transmitting data according to embodiments of the present invention.

It is noted that not all the drawings carry all the reference signs. Instead, in some of the drawings, some of the reference signs have been omitted for sake of brevity and simplicity of illustration. Embodiments of the present invention will now be described with reference to the accompanying drawings.

### Detailed Figure Description

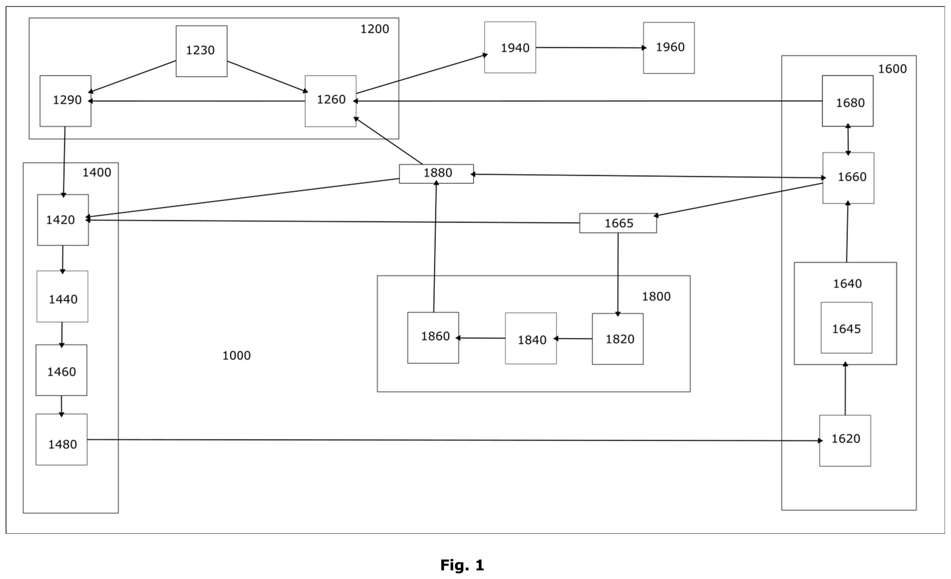

Fig. 1 schematically depicts the system 1000 comprising acquiring component 1200, classifying component 1400, validation component 1600 and subsequent classification component 1800. System 1000 also comprises moderator device 1940 and administrator device 1960. The system 1000 may be used for long-term user classification and/or user monitoring. The system 1000 may also be used as a user monitoring system for long-term user classification.

Acquiring component 1200 further comprises a human interface device 1230, end-user device 1260 and data structure 1290.

Classifying component 1400 further comprises an encoder 1420, a main component 1440, a decoder component 1460, outputting at least one classification option 1480.

Validation component 1600 further comprises a selection component 1620, an implementation component 1640 configured to generate organized classification options 1645, a validation device 1660 outputting at least one validation score 1665, and at least one sensor 1680.

Subsequent Classification component 1800 further comprises an encoder 1820, a main component 1840, a decoder component 1860, outputting at least one long-term classification option 1880.

User data may be detected by the acquiring component 1200 by either human interface 1230 and end-user device 1260 and then stored into a data structure 1290. Data required for the classifying component 1400 is then transmitted to encoder 1420, which encodes said data into features. Main component 1440 outputs a list of resulting features according to the features outputted by encoder 1420. Decoder 1460 then decodes the resulting features into a least one classification option 1480.

The at least one classification option and/or list of classification options 1480 is then transmitted to validation component 1600, or more particularly to selection component 1620 which would select at least one or a multitude of classification options from the at least one classification option and/or list of classification options 1480. The selected options are then sent to the implementation component 1640 which organizes the selection into an ordered list of classification component 1645. The implementation component, may order the options according to temporal feasibility, spatial feasibility, data stored in data structure 1290. Said list 1645 may be transmitted to end-user device 1260.

When it is time for validation, sensor 1680, is configured to detect end-user device 1260 and transmit data to validation device 1660 which would have received data relating to the list 1645. According to a surveillance user operating the validation device 1660, a validation score 1665 may be outputted. The validation score may be accompanied by a validation state according to threshold set by either the validation device 1660, the moderator device 1940 and/or the administrator device 1960.

Validation score 1665 is then transmitted to the subsequent classification component 1800, or more particularly to encoder 1820 which encodes said data into features. Main component 1840 outputs a list of resulting features according to the features outputted by encoder 1820. Decoder 1860 then decodes the resulting features into a least one long-term classification option 1880. Long-term classification option 1880 (as well as validation score 1665) may be transmitted to the end-user device 1260, data structure 1290 and/or encoder 1420 in case of another classification needed.

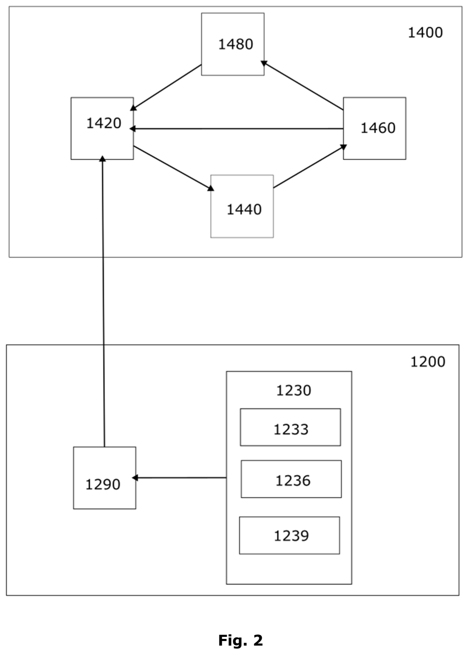

Fig. 2 depicts acquiring component 1200 and classifying component 1400. More particularly, acquiring component 1200 comprises a multitude of human interface devices 1230, and data structure 1290. Human interface devices 1233, 1236 and 1239 may be configured to acquire multiple types of data to store into a data structure 1290.

For example, human interface device 1233 may comprise but may not be limited to a camera configured to capture visual data (e.g., capturing images and/or videos of the user), microphone configured to capture audio data (e.g., recording audio from the user), keyboard configured to allow the insertion of text and/or other keyboard commands (e.g. allowing the user to enter text data and/or other keyboard commands by having the user type on the keyboard) and/or trackpad, mouse, touchscreen, joystick - configured to facilitate the navigation through different graphical user interfaces.

End-user device 1260 may also comprise screens or monitors configured to display visual data (e.g. displaying graphical user interfaces to the user), speakers configured to communicate audio data (e.g. playing audio data to the user).

Classification component 1400, may improve itself overtime. After encoder 1420 receives the data and sends the features to main component 1440, decoder 1460 may output some its results such as the list of classification options 1480 (intermediary and/or output results) back to encoder 1420 to improve the robustness of the encoder 1420. Classification component may or may not make use of AI and/or machine learning algorithms.

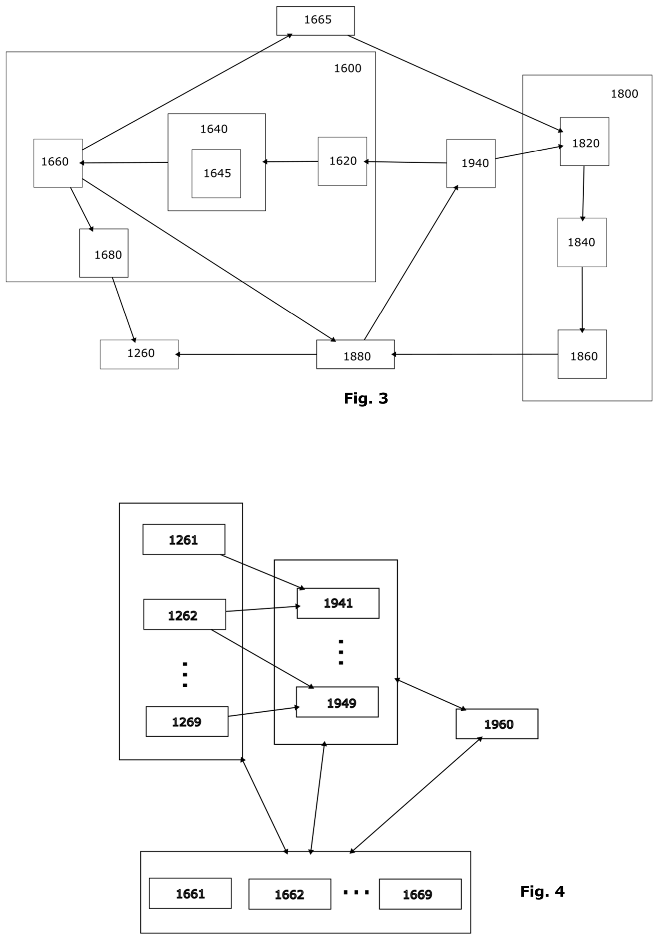

Fig. 3 depicts a validation component 1600 and subsequent classification component 1800. More particularly, validation component 1600 comprising a selection component 1620, an implementation component 1640 configured to output organized classification options 1645, a validation device 1660 outputting at least one validation score 1665, and at least one sensor 1680.

Sensor 1680 may comprise but may not be limited to a camera, an RFID reader, a code scanner, configured to detect at least one user and/or at least one end-user device. The data detected by the sensor may be sent to end-user device 1260 and stored in data structure 1290 (not shown). End-user device 1260 may also confirm the data acquired by sensor 1680.

The functioning of subsequent classification component 1800 may or may not bear resemblance to classification component 1400 as described in Fig. 2. The long-term classification component 1880 will be transmitted to end-user component 1260, moderator device 1940 and might be modified according to validation component 1660. Additionally, moderator module 1940 may transmit data to the selection component 1620 and/or encoder component 1820, which allows modification of the data according to the moderator user.

Fig. 4 depicts an example of some of the system 1000's devices' data transmission, more particularly the data transmission happening between devices directly operated by users. End-user devices 1261, 1262 and 1269 transmit data to moderator devices 1941 and 1949 operated by moderator users. Validation devices 1661, 1662 and 1669, operated by surveillance users may communicate with end-user devices 1261, 1262 and 1269, moderator devices 1941 and 1949 and administrator device 1860. Administrator device 1960 oversees the operations of the system 1000.

For example, administrator device 1960 may detect data related to a surveillance user candidate from data acquired by any of end-user devices 1261, 1262 and/or 1269. The administrator user via the administrator device 1960 may communicate with the surveillance user candidate and assign a validation device accordingly.

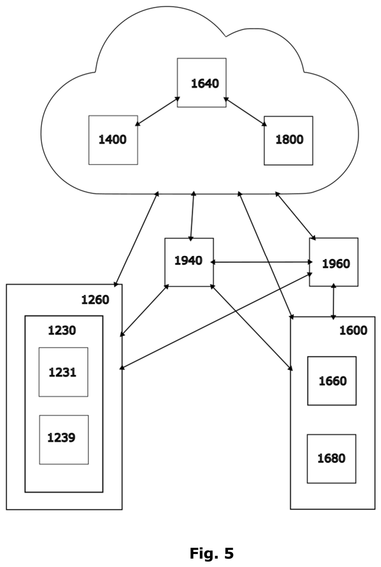

Fig. 5 depicts an example of the system 1000's component data storage layout according to embodiments of the present invention. More particularly, Fig. 5 depicts an end-user device 1260 comprising human interface devices 1231 and 1239, validation device 1600 comprising validation device 1660 and sensor 1680. Classification component 1400, subsequent classification component 1800 and implementation component 1640 may be located in an external server and the data generated by these components may be transmitted to end0user device 1260, validation device 1600, moderator device 1940 and administrator device 1960.

While in the above, a preferred embodiment has been described with reference to the accompanying drawings, the skilled person will understand that this embodiment was provided for illustrative purpose only and should by no means be construed to limit the scope of the present invention, which is defined by the claims.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

### Reference Numerals

- 1000: System

- 1200: Acquiring Component
- 1230: Human Interface Device
- 1233: HID 1
- 1236: HID 2
- 1239: HID 3
- 1260: End-User Device
- 1261: End-User Device 1
- 1262: End-User Device 2
- 1269: End-User Device 3
- 1290: Data structure

- 1400: Classifying component
- 1420: Encoder
- 1440: Main Component
- 1460: Decoder
- 1480: Classification Option

- 1600: Validation Component
- 1620: Selection Component
- 1640: Implementation Component
- 1645: Organized Classification Options
- 1660: Validation Device
- 1661: Validation Device 1
- 1662: Validation Device 2
- 1669: Validation Device 3
- 1665: Validation Score
- 1680: Sensor

- 1800: Subsequent Classification Component
- 1820: Encoder
- 1840: Main Component
- 1860: Decoder
- 1880: Long Term Classification Option

- 1940: Moderator Device
- 1941: Moderator Device 1
- 1949: Moderator Device 2
- 1960: Administrator Device

## Claims

1. A system wherein the system is a system for long-term user classification, wherein the system comprises:
an acquiring component, wherein the acquiring component is configured to acquire at least one data related to at least one user,
a classifying component, wherein the classifying component is configured to classify at least one user according to at least one data acquired by the acquiring component,
a validation component, wherein the validation component is configured to validate at least one classification option and/or a multitude of classification options,
a subsequent classification component wherein the subsequent classification component is configured to generate at least one long-term classification option to at least one user and is configured to classify at least one user according to at least one data acquired by the validation component.

2. The system according to the preceding claim wherein the acquiring component comprises at least one human interface device (HID) wherein the at least one human interface device is configured to acquire at least one data related to at least one user, and wherein the acquiring component is configured to store at least one data into at least one user data structure.

3. The system according to any of the preceding claims, wherein the classifying component comprises at least one encoder, wherein the at least one encoder comprises at least one processing component, wherein the at least one processing component is configured to extract at least one feature from at least one data, a main component, wherein the main component comprises at least one processing component, wherein the at least one processing component is configured to output at least one resulting feature from at least one feature, and/or classify at least one feature into at least one resulting feature, and at least one decoder, wherein the at least one decoder comprises at least one processing component, wherein the at least one processing component is configured to output at least one classification option from at least one resulting feature.

4. The system according to any of the preceding claims wherein the validation component comprises at least one selection component, wherein the at least one selection component is configured to select at least one classification option according to at least one user input, at least one implementation component is configured to organize a multitude of classification options according to feasibility with respect to at least one user and/or at least one surveillance user.

5. The system according to any of the preceding claims wherein the validation component is configured to output at least one validation score corresponding to at least one user, wherein the validation component comprises at least one validation device, wherein the at least one validation device is configured to validate at least one classification option, and/or wherein the validation device is configured to output at least one validation score according to at least one surveillance user input.

6. The system according to any of the preceding claims, wherein the validation component comprises at least one sensor, wherein the at least one sensor is configured to detect at least one end-user device.

7. The system according to any of the preceding claims, wherein the subsequent classification component comprises at least one encoder, wherein the at least one encoder comprises at least one processing component, wherein the at least one processing component is configured to extract at least one feature from at least one data, a main component, wherein the main component comprises at least one processing component, wherein the at least one processing component is configured to output at least one resulting feature from at least one feature and/or is configured to classify at least one feature into at least one resulting feature, and at least one decoder, wherein the at least one decoder comprises at least one processing component, wherein the at least one processing component is configured to output at least one long-term classification option from at least one resulting feature.

8. The system according to any of the preceding claims with the features of claim 4 and/or claim 5 wherein the system comprises at least one moderator device, wherein the moderator device is configured to be operated by a moderator user, wherein the at least one moderator device is configured to communicate with the at least one validation device and/or at least one end-user device, wherein the subsequent classification module is configured to transmit at least one long-term classification option to the at least one moderator device, and/or wherein the selection component is configured to transmit and/or receive data to and/or from the at least one moderator device.

9. The system according to any of the preceding claims with the features of claim 8 wherein the system comprises an administrator device, wherein the administrator device is configured to be operated by an administrator user, and/or communicate with at least one moderator device, the at least one validation device and/or the at least one end-user device.

10. The system according to any of the preceding claims with the features of claim 3, wherein the at least one decoder is configured to transmit at least one data to the at least one encoder, wherein the at least one data relates to the at least one resulting feature and/or the at least one classification option and wherein the at least one decoder is configured to enhance the training of the at least one encoder.

11. The system according to any of the preceding claims wherein, the system is a system for user monitoring.

12. A method wherein the method is a method for long-term user classification, wherein the method comprises:
operating an acquiring component, wherein operating the acquiring component comprises acquiring at least one data related to at least one user,
operating a classifying component, wherein operating the classifying component comprises classifying at least one user according to at least one data acquired by the acquiring component,
operating a validation component, wherein operating the validation component comprises validating at least one classification option and/or a multitude of classification options,
operating a subsequent classification component wherein operating the subsequent classification component comprises generating at least one long-term classification option to at least one user and comprises classifying at least one user according to at least one data acquired by the validation component.

13. The method according to the preceding claim wherein operating the acquiring component comprises operating at least one human interface device (HID) wherein operating the at least one human interface device comprises acquiring at least one data related to at least one user, and wherein operating the acquiring component comprises storing at least one data into at least one user data structure.

14. The method according to any of the 2 preceding claims, wherein operating the classifying component comprises at least one encoder, wherein operating the at least one encoder comprises operating at least one processing component, wherein operating the at least one processing component comprises extracting at least one feature from at least one data, operating a main component, wherein operating the main component comprises operating at least one processing component, wherein operating the at least one processing component comprises outputting at least one resulting feature from at least one feature, and/or classifying at least one feature into at least one resulting feature, and at least one decoder, wherein operating the at least one decoder comprises at least one processing component, wherein operating the at least one processing component comprises outputting at least one classification option from at least one resulting feature.

15. The method according to any of the 3 preceding claims wherein operating the wherein operating the validation component comprises operating at least one selection component, wherein operating the at least one selection component comprises selecting at least one classification option according to at least one user input, operating at least one implementation component comprises organizing a multitude of classification options according to feasibility with respect to at least one user and/or at least one surveillance user.
